# EUROPÄISCHE PATENTSCHRIFT

(11) **EP 2 880 499 B1**
(45) Veröffentlichungstag und Bekanntmachung des Hinweises auf die Patenterteilung: **10.07.2019**
(21) Anmeldenummer: 13758771.3
(22) Anmeldetag: 23.08.2013
(51) Int. Cl.: G06N 7/00, G05B 13/02

(54) **VERFAHREN ZUR RECHNERGESTÜTZTEN STEUERUNG UND/ODER REGELUNG EINES TECHNISCHEN SYSTEMS**
METHOD FOR CONTROLLING AND/OR REGULATING A TECHNICAL SYSTEM IN A COMPUTER-ASSISTED MANNER
PROCÉDÉ DE COMMANDE ET/OU DE RÉGULATION ASSISTÉE PAR ORDINATEUR D'UN SYSTÈME TECHNIQUE

(30) Priorität: 17.09.2012 DE 102012216574
(43) Veröffentlichungstag der Anmeldung: 10.06.2015
(73) Patentinhaber: Siemens Aktiengesellschaft, 80333 München (DE)
(72) Erfinder: HENTSCHEL, Alexander, 81929 München (DE); UDLUFT, Steffen, 82223 Eichenau (DE); DÜLL, Siegmund, 80336 München (DE)
(86) Internationale Anmeldenummer: PCT/EP2013/067520
(87) Internationale Veröffentlichungsnummer: WO 2014/040839

(56) Entgegenhaltungen:
- DE-A1- 19 904 974
- DE-A1-102007 017 259

## Beschreibung

Die Erfindung betrifft ein Verfahren zur rechnergestützten Steuerung und/oder Regelung eines technischen Systems, insbesondere eine Energieerzeugungsanlage.

Bei der Steuerung bzw. Regelung von technischen Systemen ist es oftmals wünschenswert, den Betrieb des technischen Systems über die Durchführung von entsprechenden Aktionen derart zu beeinflussen, dass das Verhalten des technischen Systems in Bezug auf bestimmte Kriterien optimiert ist. Beispielsweise ist es bei dem Betrieb einer Gasturbine sinnvoll, die durch die Turbine erzeugten Abgasemissionen zu reduzieren bzw. die Verbrennungsdynamik der Brennkammer der Gasturbine (auch als Brennkammerbrummen bezeichnet) möglichst gering zu halten. Dabei kann z.B. auf Parameter betreffend die Zuführung von Gas zur Brennkammer der Gasturbine Einfluss genommen werden.

Aus dem Stand der Technik sind rechnergestützte Verfahren bekannt, mit denen eine Aktionsauswahlregel bestimmt wird, wonach für entsprechende aufeinander folgende Zustände des technischen Systems, welche durch geeignete Zustandsvariablen des Systems charakterisiert sind, Aktionen ermittelt werden, welche im Hinblick auf ein Optimierungskriterium, wie z.B. die oben erwähnte geringe Schadstoffemission bzw. ein geringes Brennkammerbrummen, optimal sind. In den Dokumenten [1] und [2] wird die Bestimmung einer Aktionsauswahlregel basierend auf dem Lernen eines rekurrenten neuronalen Netzes mit Trainingsdaten aus bekannten Zuständen und Aktionen beschrieben. Gemäß der Aktionsauswahlregel wird eine Aktionssequenz für einen aktuellen Zustand des technischen Systems unter Berücksichtigung von vergangenen Zuständen in Abhängigkeit von einem Optimalitätskriterium ausgegeben. Die Aktionssequenz kann im Realbetrieb des technischen Systems in kurzer Rechenzeit bestimmt werden. Es ist dabei jedoch nicht immer sichergestellt, dass die gemäß der Aktionsauswahlregel bestimmten Aktionen optimal im Sinne des Optimalitätskriteriums sind. Abweichungen können insbesondere dann auftreten, wenn die Zustände des technischen Systems, für welche die Aktionssequenz bestimmt wird, in Betriebsbereichen liegen, welche weit entfernt von den Trainingsdaten sind.

Aus dem Dokument DE 199 04 974 A1 ist ein Verfahren zum rechnergestützten Betreiben eines Dampferzeugers bekannt, bei dem ein auf mehreren neuronalen Netzen basierendes dynamisches Modell des Dampferzeugers zur vorausschauenden Einstellung optimaler Führungsgrößen verwendet wird. Auch hier können jedoch Betriebsbereiche, die weit entfernt von den Trainingsdaten sind, zu Abweichungen vom Optimalitätskriterium führen.

Aufgabe der Erfindung ist es deshalb, ein Verfahren zur rechnergestützten Steuerung und/oder Regelung eines technischen Systems zu schaffen, welches schnell und genau die am technischen System gemäß einem Optimierungskriterium durchzuführenden Aktionen bestimmt.

Diese Aufgabe wird durch die unabhängigen Patentansprüche gelöst. Weiterbildungen der Erfindung sind in den abhängigen Ansprüchen definiert.

Das erfindungsgemäße Verfahren dient zur rechnergestützten Steuerung und/oder Regelung eines technischen Systems. Das technische System ist dabei insbesondere eine Energieerzeugungsanlage und in einer besonders bevorzugten Ausführungsform eine Gasturbine, wie weiter unten näher beschrieben ist. Gegebenenfalls kann das technische System jedoch auch eine Energieerzeugungsanlage in der Form einer regenerativen Energieerzeugungsanlage, wie z.B. eine Windturbine, sein. Das dynamische Verhalten des technischen Systems wird im erfindungsgemäßen Verfahren für mehrere Zeitpunkte jeweils durch einen Zustand des technischen Systems und eine in diesem Zustand am technischen System durchgeführte Aktion charakterisiert, wobei eine jeweilige Aktion zu einem jeweiligen Zeitpunkt in einen neuen Zustand des technischen Systems zum nächsten Zeitpunkt führt. Eine Aktionssequenz stellt dabei eine oder mehrere aufeinander folgend am technischen System durchzuführende Aktionen dar. Ein Zustand des technischen Systems umfasst eine und vorzugsweise mehrere Zustandsvariablen, welche Betriebszustände des technischen Systems bzw. den Betrieb des technischen Systems beeinflussende Größen sind. Demgegenüber sind Aktionen die Veränderung von einer oder mehreren Aktionsvariablen, wobei die Aktionsvariablen gegebenenfalls auch Zustandsvariablen darstellen können, welche im Rahmen der Regelung bzw. der Steuerung des technischen Systems verändert werden können.

In einem Schritt a) des erfindungsgemäßen Verfahrens wird über eine Aktionsauswahlregel, welche durch Lernen eines datengetriebenen Modells basierend auf Trainingsdaten umfassend Datensätze aus bekannten Zuständen und Aktionen zu mehreren Zeitpunkten bestimmt wurde, für den Zustand des technischen Systems zu einem aktuellen Zeitpunkt (d.h. zu dem Zeitpunkt, zu dem ein Steuer- bzw. Regeleingriff erfolgen soll) eine erste Aktionssequenz aus einer oder mehreren am technischen System aufeinander folgend durchzuführenden Aktionen umfassend eine initiale Aktion zum aktuellen Zeitpunkt ermittelt, wobei die erste Aktionssequenz auf einem beim Lernen des datengetriebenen Modells berücksichtigten Optimierungskriterium für den Betrieb des technischen Systems basiert und ein Gütemaß in Bezug auf das Optimierungskriterium aufweist. Je höher das Gütemaß ist, desto besser ist das entsprechende Optimierungskriterium erfüllt. Bei der Ermittlung der ersten Aktionssequenz werden in einer bevorzugten Ausführungsform der Zustand des technischen Systems zum aktuellen Zeitpunkt sowie eine Historie von weiteren vergangenen Zuständen berücksichtigt.

In einem Schritt b) wird anschließend mittels eines numerischen Optimierungsverfahrens nach solchen zweiten Aktionssequenzen aus einer oder mehreren am technischen System aufeinander folgend durchzuführenden Aktionen umfassend eine initiale Aktion zum aktuellen Zeitpunkt gesucht, welche ein Gütemaß aufweisen, das höher als das Gütemaß der erste Aktionssequenz ist. Dabei wird die Suche bei einer Anzahl von Start-Aktionssequenzen (d.h. zumindest einer Start-Aktionssequenz) begonnen, welche durch Variation einer Anzahl von initial bereitgestellten Aktionssequenzen umfassend die erste Aktionssequenz bestimmt werden. Hierbei werden Start-Aktionssequenzen mit einer geringen Variation gegenüber einer entsprechenden initial bereitgestellten Aktionssequenz basierend auf einem Prioritätskriterium bevorzugt. Die Start-Aktionssequenzen werden anschließend im weiteren Verlauf gemäß der Vorschrift des numerischen Optimierungsverfahrens iterativ verändert, um hierdurch zweite Aktionssequenzen mit einem höheren Gütemaß aufzufinden.

Gemäß Schritt b) wird somit ein numerisches Optimierungsverfahren bevorzugt in einem lokalen Bereich um die erste Aktionssequenz bzw. weiterer zur Initialisierung verwendeter Aktionssequenzen begonnen. Die Größe der Variation, d.h. die Unterschiedlichkeit zwischen einer initial bereitgestellten Aktionssequenz und der daraus durch Variation erzeugten Start-Aktionssequenz, kann in geeigneter Weise z.B. basierend auf einer Metrik für jede Aktion der Aktionssequenz definiert sein. In diesem Fall ist die Variation einer Aktion umso größer, je größer der Abstand gemäß der Metrik zwischen dieser Aktion in der variierten Aktionssequenz von der entsprechende Aktion in der nicht-variierten Aktionssequenz ist. Ebenso kann im Raum der Aktionssequenzen eine geeignete Metrik definiert sein, so dass die Gesamtvariation der Aktionssequenz über den Abstand zwischen der variierten Aktionssequenz und der nicht-variierten Aktionssequenz gemäß der Metrik bestimmt wird. Zudem kann das Prioritätskriterium unterschiedlich ausgestaltet sein. Zum Beispiel kann das Prioritätskriterium als Wahrscheinlichkeitskriterium festgelegt sein. Das heißt, gemäß einer oder mehreren Wahrscheinlichkeitsfunktionen steigt die Wahrscheinlichkeit, dass eine variierte Aktionssequenz als Start-Aktionssequenz in dem numerischen Optimierungsverfahren verwendet wird, je geringer die Variation dieser Aktionssequenz verglichen mit der zugrundeliegenden initial bereitgestellten Aktionssequenz ist. Ebenso kann das Prioritätskriterium auf einem harten Schwellwertkriterium beruhen, wobei solche Aktionssequenzen nicht als Start-Aktionssequenzen des numerischen Optimierungsverfahrens zugelassen sind, deren Variation eine vorbestimmte Schwelle überschreitet. Dabei kann z.B. für jede Aktion der Aktionssequenz ein entsprechender Schwellwert festgelegt sein, wobei die Variation der jeweiligen Aktion den Schwellwert nicht überschreiten darf. Falls die Variation über eine Metrik für die gesamte Aktionssequenz beschrieben wird, kann auch ein einziger Schwellwert für die gesamte Sequenz festgelegt sein.

In einem Schritt c) des erfindungsgemäßen Verfahrens wird schließlich im Falle, dass in Schritt b) eine oder mehrere zweite Aktionssequenzen mit einem höheren Gütemaß gefunden werden, zumindest ein Teil der aufeinander folgenden Aktionen der zweiten Aktionssequenz mit dem höchsten Gütemaß am technischen System durchgeführt. Werden keine zweiten Aktionssequenzen mit einem höheren Gütemaß gefunden, wird zumindest ein Teil der aufeinander folgenden Aktionen der ersten Aktionssequenz durchgeführt. Nach der Durchführung des entsprechenden Teils der Aktionen der ersten bzw. zweiten Aktionssequenzen können dann wieder die Schritte a) bis c) des erfindungsgemäßen Verfahrens zur Bestimmung eines neuen Steuer- bzw. Regeleingriffs durchgeführt werden.

Das erfindungsgemäße Verfahren weist den Vorteil auf, dass eine mit einem datengetriebenen Modell gelernte Aktionsauswahlregel mittels eines numerischen Optimierungsverfahrens verbessert werden kann, wobei durch eine priorisierte lokale Suche (Optimierung) nach (zweiten) Aktionssequenzen sichergestellt ist, dass Aktionssequenzen mit einem höheren Gütemaß als das Gütemaß der ersten Aktionssequenz schnell berechnet werden können und das Verfahren somit im Realbetrieb des technischen Systems eingesetzt werden kann.

Das in Schritt a) des erfindungsgemäßen Verfahrens verwendete gelernte datengetriebene Modell umfasst in einer bevorzugten Ausführungsform ein neuronales Netz und insbesondere ein rekurrentes neuronales Netz. In einer besonders bevorzugten Variante wird das in der Druckschrift [1] bzw. in der Druckschrift [2] beschriebene neuronale Netz verwendet, bei dem ein rekurrentes neuronales Netz mit einem Feed-Forward-Netz zum Bestimmen einer Aktionsauswahlregel kombiniert wird. Das heißt, die Aktionsauswahlregel gemäß Schritt a) wurde in diesem Fall mit dem Verfahren aus der Druckschrift [1] bzw. [2] bestimmt. Anstatt eines neuronalen Netzes können in abgewandelten Ausführungsformen auch datengetriebene Modelle eingesetzt werden, welche auf Gaußschen Prozessen und/oder Regressionsbäumen und/oder auf einer Support Vector Regression beruhen. Solche Modelle sind hinlänglich aus dem Stand der Technik bekannt und werden deshalb nicht näher erläutert.

Das in Schritt b) des erfindungsgemäßen Verfahrens verwendete numerische Optimierungsverfahren ist in einer besonders bevorzugten Ausführungsform ein nicht-konvexes heuristisches Optimierungsverfahren bzw. ein gradientenfreies stochastisches Suchverfahren. Entsprechende Verfahren sind aus dem Stand der Technik bekannt. In einer besonders bevorzugten Ausführungsform wird als numerisches Optimierungsverfahren eine Teilchenschwarmoptimierung (englisch: Particle Swarm Optimization) und/oder ein evolutionärer Algorithmus und/oder ein generischer Algorithmus und/oder Simulated Annealing eingesetzt. Auch diese Verfahren sind aus dem Stand der Technik bekannt. Eine nähere Beschreibung der Teilchenschwarmoptimierung findet sich in den Druckschriften [3] bis [6]. Eine Beschreibung von generischen Algorithmen findet sich in der Druckschrift [7].

In einer weiteren Ausgestaltung des erfindungsgemäßen Verfahrens greift die in Schritt a) verwendete Aktionsauswahlregel auf ein für das technische System bestimmtes Simulationsmodell zu, mit dem aus einer Aktion der ersten Aktionssequenz, die für einen Zustand zu einem Zeitpunkt durchgeführt wird, ein Folgezustand des technischen Systems zum nächsten Zeitpunkt ermittelt wird, wobei für den Folgezustand die Aktionsauswahlregel die nächste Aktion der ersten Aktionssequenz festlegt. Das Simulationsmodell wird vorzugsweise auch beim Lernen der Aktionsauswahlregel berücksichtigt. Insbesondere kann das Simulationsmodell wiederum über das Lernen eines neuronalen Netzes bzw. eines rekurrenten neuronalen Netzes bestimmt worden sein. Das zum Lernen des Simulationsmodells verwendete neuronale Netz kann dabei auch im Rahmen des Lernens der Aktionsauswahlregel eingesetzt werden, wie dies in den Dokumenten [1] und [2] der Fall ist. Dort wird zunächst ein Simulationsmodell des technischen Systems basierend auf einem rekurrenten neuronalen Netz gelernt, und anschließend erfolgt das Lernen der Aktionsauswahlregel derart, dass das gelernte rekurrente neuronale Netz mit einem Feed-Forward-Netz kombiniert wird.

In einer weiteren bevorzugten Ausgestaltung des erfindungsgemäßen Verfahrens werden mit dem Simulationsmodell ferner aus den jeweiligen Aktionen der zweiten Aktionssequenz Folgezustände des technischen Systems bestimmt, wobei ein Bewertungsmaß für jeden Folgezustand der ersten und zweiten Aktionssequenz ermittelt wird und das Gütemaß umso höher ist, je höher die Summe der Bewertungsmaße aller Folgezustände in der ersten bzw. zweiten Aktionssequenz ist. In diesem Fall wird die Güte einer Aktionssequenz basierend auf zukünftig durchzuführenden Aktionen der Aktionssequenz bestimmt.

In einer weiteren Ausgestaltung des erfindungsgemäßen Verfahrens werden die Schritte a) bis c) in vorbestimmten Zeitabständen wiederholt und dabei die in Schritt c) zumindest teilweise ausgeführten ersten und zweiten Aktionssequenzen in einer Datenbank gespeichert, wobei in Schritt b) als initial bereitgestellte Aktionssequenzen die erste Aktionssequenz sowie diejenigen Aktionssequenzen aus der Datenbank verwendet werden, deren initiale Aktionen in Zuständen des technischen Systems ausgeführt wurden, welche gemäß einer Metrik im Raum der Zustände einen Abstand von dem Zustand des technischen Systems zum aktuellen Zeitpunkt aufweisen, der kleiner oder kleiner gleich einem vorbestimmten Schwellwert ist. Auf diese Weise kann durch Berücksichtigung von zuvor ermittelten Aktionssequenzen das numerische Optimierungsverfahren beschleunigt werden bzw. schneller zu einer verbesserten Aktion führen.

In einer weiteren Ausgestaltung des erfindungsgemäßen Verfahrens wird bei Vorliegen von einem oder mehreren Kriterien ein bereits abgeschlossenes numerisches Optimierungsverfahren fortgesetzt, wobei bei der Fortsetzung nach zweiten Aktionssequenzen mit einem höheren Gütemaß als die erste Aktionssequenz gesucht wird, ohne dass das Prioritätskriterium bei der Bestimmung der Start-Aktionssequenzen berücksichtigt wird. Das oder die Kriterien umfassen dabei insbesondere das Kriterium, dass eine für das Verfahren zur Verfügung stehende Rechenkapazität eine vorbestimmte Schwelle überschreitet. Bei ausreichender Rechenkapazität kann somit eine Verbesserung des numerischen Optimierungsverfahrens erreicht werden. Wenn bei der Fortsetzung des numerischen Optimierungsverfahrens eine nochmals bessere zweite Aktionssequenz (d.h. eine zweite Aktionssequenz mit nochmals höherem Gütemaß) gefunden wird, wird diese vorzugsweise in der oben beschriebenen Datenbank gespeichert, wobei gegebenenfalls die zuvor über das Optimierungsverfahren gefundene zweite Aktionssequenz überschrieben wird.

In einer weiteren Ausgestaltung des erfindungsgemäßen Verfahrens wird das Lernen des datengetriebenen Modells zu vorbestimmten Zeitpunkten basierend auf den Trainingsdaten sowie weiteren Trainingsdaten fortgesetzt, wobei die weiteren Trainingsdaten Datensätze umfassen, welche jeweils eine in Schritt c) zumindest teilweise durchgeführte Aktionssequenz sowie zumindest den Zustand des technischen Systems beinhalten, in dem diese Aktionssequenz begonnen wurde. Vorzugsweise umfasst ein Datensatz dabei neben dem Zustand, zu dem die Aktionssequenz begonnen wurde, eine Historie von aufeinander folgenden Zuständen, die vor diesem Zustand liegen.

In einer bevorzugten Variante der soeben beschriebenen Ausführungsform wird immer dann, wenn beim Fortsetzen des Lernens ein Datensatz aus den weiteren Trainingsdaten verwendet wird, anstatt des Optimierungskriteriums für den Betrieb des technischen Systems das Optimierungskriterium einer möglichst geringen Abweichungen zwischen der über das datengetriebene Modell bestimmten Aktionssequenz und der Aktionssequenz gemäß dem Datensatz aus den weiteren Trainingsdaten berücksichtigt.

Mit dem erfindungsgemäßen Verfahren wird in einer besonders bevorzugten Variante eine elektrische Energieerzeugungsanlage umfassend eine Gasturbine geregelt bzw. gesteuert. Ein Zustand der Gasturbine umfasst dabei vorzugsweise eine oder mehrere der nachfolgenden Zustandsvariablen, wobei eine Aktion insbesondere eine Veränderung von einer oder mehreren der nachfolgenden Zustandsvariablen betrifft:
- der Verdichterwirkungsgrad der Gasturbine;
- der Turbinenwirkungsgrad der Gasturbine;
- die geregelte Abgastemperatur der Gasturbine;
- die Stellung einer oder mehrerer Leitschaufeln, insbesondere im Verdichter der Gasturbine;
- die Rotationsgeschwindigkeit der Gasturbine;
- eine oder mehrere Drücke und/oder Temperaturen in der Gasturbine, insbesondere die Eintrittstemperatur und/oder der Eintrittsdruck und/oder die Austrittstemperatur und/oder der Austrittsdruck im Verdichter und/oder in der Turbine;
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- ein oder mehrere Massen- und/oder Volumenströme;
- ein oder mehrere Parameter von einem Kühl- und/oder Hilfssystem und/oder Schmieröl- und/oder Lagersystemen in der Gasturbine, insbesondere die Stellung von einem oder mehreren Ventilen zur Zufuhr von Kühlluft;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Verbrennungsdynamik der Brennkammer der Gasturbine;
- ein oder mehrere Parameter betreffend die Zuführung von Gas zu der Brennkammer der Gasturbine;
- die Menge an der Gasturbine zugeführtem Gas;
- Lager- und/oder Gehäuseschwingungen in der Gasturbine.

Im Falle einer Gasturbine eignet sich als Optimierungskriterium für den Betrieb des technischen Systems insbesondere eine möglichst geringe Schadstoffemission der Gasturbine und/oder eine möglichst geringe Dynamik der Brennkammer der Gasturbine.

Neben dem oben beschriebenen Verfahren betrifft die Erfindung ferner eine Vorrichtung zur rechnergestützten Steuerung und/oder Regelung eines technischen Systems, insbesondere einer elektrischen Energieerzeugungsanlage, wobei die Vorrichtung eine Rechnereinheit umfasst, mit der das erfindungsgemäße Verfahren bzw. eine oder mehrere Varianten des erfindungsgemäßen Verfahrens durchführbar sind.

Die Erfindung betrifft darüber hinaus ein technisches System, insbesondere eine Energieerzeugungsanlage und vorzugsweise eine Gasturbine, welches die soeben beschriebe Vorrichtung beinhaltet.

Darüber hinaus umfasst die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ausführungsbeispiele der Erfindung werden nachfolgend anhand der beigefügten Figuren detailliert beschrieben.

Es zeigen:
- Fig. 1: eine schematische Darstellung einer Ausführungsform des erfindungsgemäßen Verfahrens; und
- Fig. 2: eine schematische Darstellung, welche das Fortsetzen des Lernens eines rekurrenten neuronalen Netzes gemäß einer Ausführungsform des erfindungsgemäßen Verfahrens verdeutlicht.

Das erfindungsgemäße Verfahren wird nachfolgend am Beispiel eines technischen Systems in der Form einer Gasturbine beschrieben. Ziel des Verfahrens ist es dabei, in einem entsprechenden Zustand der Gasturbine eine Sequenz von optimalen, in diesem Zustand und in Folgezuständen auszuführenden Aktionen zu bestimmen. Ein Zustand ist dabei ein Vektor aus einer Vielzahl von Zustandsvariablen und kann die oben erläuterten Variablen umfassen. Eine Aktion betrifft die Veränderung einer oder mehrerer Zustandsvariablen, die in der Gasturbine verstellt werden können. In dem erfindungsgemäßen Verfahren haben sich z.B. Parameter betreffend die Zuführung von Gas in die Brennkammer der Gasturbine als Zustandsvariablen für praktikabel erwiesen. Entsprechende Aktionen betreffen dabei die Veränderungen dieser Parameter. Die Parameter umfassen insbesondere entsprechende Brennstoffanteile, die an verschiedenen Positionen in die Brennkammer der Gasturbine eingespritzt werden. Diese Anteile können entsprechend verändert werden, wodurch Aktionen generiert werden. In dieser Variante der Erfindung stellen optimale Aktionen solche Aktionen dar, welche langfristig zu einem geringen Brummen in der Brennkammer führen. Gegebenenfalls können die Aktionen auch im Hinblick auf andere bzw. weitere Optimierungskriterien bestimmt werden, wie z.B. möglichst geringe Emissionen an Schadstoffen.

Im Rahmen der hier erläuterten Ausführungsform wird ausgehend von einem aktuellen Zustand des technischen Systems unter Berücksichtigung von einer Anzahl von vergangenen Zuständen in geeigneter Weise eine Aktionssequenz von im aktuellen und mehreren zukünftigen Zuständen durchzuführenden Aktionen festgelegt. Dabei wird eine Aktionsauswahlregel, die mit einem an sich bekannten Verfahren über das Lernen eines neuronalen Netzes bestimmt wurde, mit einem numerischen Optimierungsverfahren in der Form einer Teilchenschwarmoptimierung kombiniert, so dass eine verbesserte Aktionsauswahlregel erhalten wird, mit der im Betrieb des technischen Systems optimale Aktionen z.B. im Hinblick auf geringes Brennkammerbrummen bestimmt werden können.

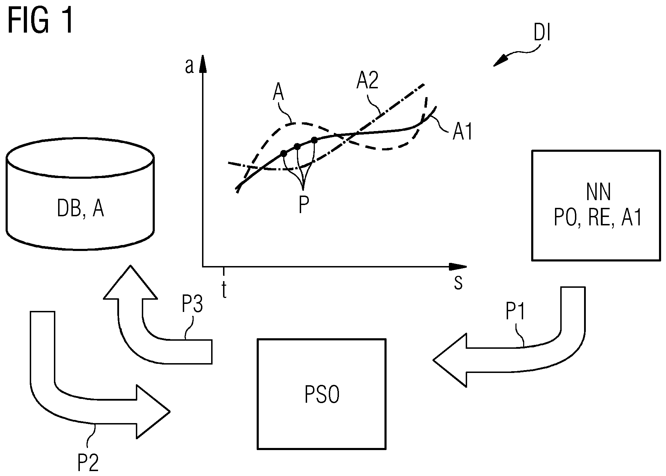

Ausgangspunkt des nachfolgend anhand von Fig. 1 erläuterten Verfahrens ist eine Aktionsauswahlregel PO, welche vorab bereits mit einem an sich bekannten Verfahren über das Lernen eines neuronalen Netzes NN bestimmt wurde. In einer besonders bevorzugten Ausführungsform wurde die Aktionsauswahlregel basierend auf dem in der Druckschrift [1] beschriebenen rekurrenten neuronalen Netz ermittelt. Zur Bestimmung der Aktionsauswahlregel wurde gemäß dieser Druckschrift ein rekurrentes neuronales Netz, welches zunächst über entsprechende Trainingsdaten zur Repräsentation des dynamischen Verhaltens des technischen Systems gelernt wurde, mit einem Feed-Forward-Netz kombiniert, um hierdurch die Aktionsauswahlregel abzuleiten. Bei der Bestimmung der Aktionsauswahlregel wurde ein entsprechendes Optimierungskriterium berücksichtigt, mit dem die Güte RE (RE = Reward) einer über die Aktionsauswahlregel bestimmten Aktionssequenz festgelegt wird. Die Güte RE stellt dabei eine Summe entsprechender Bewertungsmaße dar, welche für jeden Zustand bestimmt werden, der im Rahmen der Durchführung der Aktionssequenz im technischen System eingenommen wird. Je höher das Bewertungsmaß, desto besser ist die Bewertung des entsprechenden Zustands. Das Optimierungskriterium ist dabei eine möglichst große Summe der Bewertungsmaße der entsprechenden Aktionssequenz. Mit anderen Worten stellt das Gütemaß die Summe der Bewertungsmaße dar, welche möglichst groß werden soll.

Mit der über das neuronale Netz NN gelernten Aktionsauswahlregel PO wird ausgehend von einem aktuellen Zeitpunkt eine erste Aktionssequenz A1 aus einer aktuellen Aktion und zukünftig durchzuführenden Aktionen bestimmt. Dies wird anhand des Diagramms DI in Fig. 1 verdeutlicht. Entlang der Abszisse des Diagramms sind dabei die zu aufeinander folgenden Zeitpunkten eingenommenen Zustände s des technischen Systems verdeutlicht, wobei der aktuelle Zeitpunkt der Regelung bzw. Steuerung durch t bezeichnet ist. Die Ordinate gibt die Aktionen a wieder. Durch die Linie A1 wird die erste Aktionssequenz verdeutlicht, die durch das neuronale Netz NN bestimmt wurde. Diese Linie besteht aus einer Vielzahl von einzelnen Aktionen zum aktuellen und zu zukünftigen Zeitpunkten, wie beispielhaft durch drei Punkte P angedeutet ist. In gleicher Weise setzen sich auch die weiter unten erläuterten Linien A und A2 zusammen, welche ebenfalls Aktionssequenzen darstellen. Je nach verwendeten Trainingsdaten für das neuronale Netz ist dabei nicht immer sichergestellt, dass die über das Netz ausgegebene Aktionssequenz A1 auch die tatsächlich beste Aktionssequenz im Sinne des Optimierungskriteriums ist. Demzufolge wird in der Ausführungsform der Fig. 1 die Aktionssequenz A1 mit einem numerischen Optimierungsverfahren in der Form einer Teilchenschwarmoptimierung PSO (PSO = Particle Small Optimization) weiterverarbeitet, was durch den Pfeil P1 angedeutet ist.

Verfahren zur Teilchenschwarmoptimierung sind an sich aus dem Stand der Technik bekannt, wie durch die bereits eingangs erwähnten Druckschriften [3] bis [6] belegt ist. Das schwarmbasierte Optimierungsverfahren PSO sucht dabei ausgehend von der ersten Aktionssequenz A1 nach zweiten Aktionssequenzen A2, welche zu einer höheren Güte RE führen. Werden solche zweiten Aktionssequenzen gefunden, wird diejenige zweite Aktionssequenz mit der höchsten Güte in einer Datenbank DB gespeichert, wie durch den Pfeil P3 angedeutet ist. Falls nicht, wird die erste Aktionssequenz in der Datenbank DB gespeichert. Die Aktionssequenzen der Datenbank DB sind in Fig. 1 mit A bezeichnet. Schließlich wird am technischen System die zweite Aktionssequenz mit der höchsten Güte bzw. die erste Aktionssequenz ausgeführt, sofern keine zweite Aktionssequenz gefunden wird.

Die Teilchenschwarmoptimierung PSO wird unter Verwendung der ersten Aktionssequenz A1 initialisiert. Ferner wird in der Datenbank DB nach weiteren, zur Initialisierung verwendbaren Aktionssequenzen A gesucht, was durch den Pfeil P2 angedeutet ist. Eine Aktionssequenz aus der Datenbank DB wird dann zur Initialisierung des schwarmbasierten Optimierungsverfahrens verwendet, wenn der Zustand des technischen Systems, ausgehend von dem die initiale Aktion der Aktionssequenz aus der Datenbank durchgeführt wurde, ähnlich zu dem Zustand des technischen Systems zum Zeitpunkt t ist. Dabei ist eine Metrik im Raum der Zustände festgelegt, wobei im Falle, dass der Abstand zwischen Zuständen einen vorbestimmten Schwellwert unterschreitet, die Zustände als ähnlich betrachtet werden. Werden entsprechende Zustände und damit Aktionssequenzen in der Datenbank DB gefunden, werden auch diese zur Initialisierung des schwarmbasierten Algorithmus verwendet. In dem Szenario der Fig. 1 ist im Diagramm DI als gestrichelte Linie eine weitere Aktionssequenz A angedeutet, die aus der Datenbank DB stammt und auch zur Initialisierung verwendet wird.

Die Suche gemäß der Teilchenschwarmoptimierung wird bei einer Anzahl von Start-Aktionssequenzen begonnen. Zur Bestimmung der Start-Aktionssequenzen werden die entsprechenden Aktionen der Aktionssequenzen A1 und A variiert, wobei hauptsächlich lokale Variationen um die entsprechenden Aktionssequenzen berücksichtigt werden. Dies wird in einer bevorzugten Ausführungsform durch eine Wahrscheinlichkeitsfunktion erreicht, wonach größere Variationen der einzelnen Aktionen in der entsprechenden Aktionssequenz umso unwahrscheinlicher werden. Gegebenenfalls kann auch eine entsprechende Metrik im Raum der Aktionssequenzen festgelegt sein, über welche die Größe einer Variation zwischen variierter und nicht-variierter Aktionssequenz festgelegt ist. Wiederum mit einem entsprechenden Wahrscheinlichkeitsmaß werden dann Aktionssequenzen mit kleineren Variationen bevorzugt. Gegebenenfalls können auch harte Schwellwerte der Variationen festgelegt werden, die nicht überschritten werden dürfen. Auf diese Weise wird sichergestellt, dass das schwarmbasierte Optimierungsverfahren seine Suche lokal um die bekannten Aktionssequenzen konzentriert, so dass verbesserte Aktionssequenzen im Echtzeitbetrieb des technischen Systems bestimmt werden können.

In dem Szenario der Fig. 1 wird schließlich eine zweite Aktionssequenz A2 gefunden, welche durch eine strichpunktierte Linie im Diagramm DI angedeutet ist. Diese Aktionssequenz weist ein höheres Gütemaß RE als die ursprüngliche erste Aktionssequenz A1 auf. Wie durch den Pfeil P3 angedeutet, wird diese Aktionssequenz dann in der Datenbank DB gespeichert und anschließend das technisches System basierend auf dieser Aktionssequenz gesteuert, indem zu entsprechenden Betriebszeitpunkten die Aktionen gemäß dieser Aktionssequenz ausgeführt werden.

In einer bevorzugten Ausführungsform werden ferner im Falle, dass genügend Rechenzeit zur Verfügung steht, bestimmte, zuvor durchgeführte schwarmbasierte Optimierungsläufe nochmals fortgesetzt, wobei in diesem Fall die Variation der Aktionssequenzen zur Bestimmung der Start-Aktionssequenzen nicht mehr beschränkt bzw. über eine Wahrscheinlichkeitsfunktion priorisiert wird. Insbesondere werden dabei die schwarmbasierten Optimierungsverfahren für solche Zustände des technischen Systems fortgesetzt, welche häufig zuvor eingenommen wurden bzw. bei denen eine große Diskrepanz zwischen der ermittelten zweiten Aktionssequenz und der ersten Aktionssequenz bestand. Auf diese Weise kann das Optimierungsverfahren weiter verbessert werden. Wird dabei eine nochmals bessere zweite Aktionssequenz gefunden, wird diese in der Datenbank DB gespeichert und ersetzt die vormals gefundene zweite Aktionssequenz.

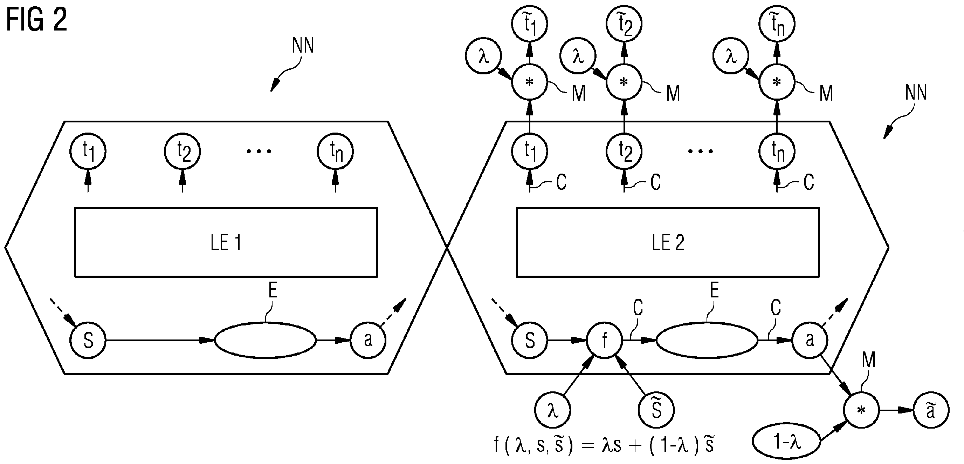

Fig. 2 zeigt eine spezielle Ausführungsform des Verfahrens der Fig. 1, bei der das neuronale Netz NN, mit dem die erste Aktionssequenz bestimmt wird, in vorbestimmten Zeitabständen weiter gelernt wird. Im linken Teil der Fig. 2 ist das herkömmliche Lernen LE1 des neuronalen Netzes NN wiedergegeben, welches im Vorfeld durchgeführt wird, um hierdurch eine Aktionsauswahlregel zur Bestimmung entsprechender erster Aktionssequenzen zu erhalten. Dabei sind von dem Netz als Eingangsgrößen einfließende Zustände s des technischen Systems sowie die daraus ermittelte Aktionssequenz a und entsprechende Bewertungen in der Form von Targets t₁, t₂, ..., tₙ angedeutet. Das neuronale Netz wird in Bezug auf eine maximale Summe der Bewertungen gelernt. Der Rest des Netzes ist lediglich schematisch durch eine Ellipse E wiedergegeben. Zum Lernen des Netzes NN werden Trainingsdaten aus entsprechenden Zuständen und Aktionen verwendet, welche das technische System eingenommen hat. Das Lernverfahren ist dabei ein bestärkendes Lernverfahren (sog. Reinforcement Learning).

Im rechten Teil der Fig. 2 ist nunmehr eine Abwandlung des Lernverfahrens LE1 gezeigt, welches mit LE2 bezeichnet ist und in regelmäßigen Abständen im Rahmen der hier beschriebenen Ausführungsform durchgeführt wird. Dabei werden neben den ursprünglichen Trainingsdaten, mit denen das Netz NN gemäß dem Lernverfahren LE1 gelernt wurde, weitere Trainingsdaten berücksichtigt, die sich aus Datensätzen zusammensetzen, welche die Aktionssequenzen ã und die Zustände s̃ umfassen. Die Aktionssequenzen ã sind dabei diejenigen Aktionssequenzen, die im Verfahren der Fig. 1 schlussendlich auf das technische System angewendet wurden. Die Zustände s̃ sind die bei der Ausführung der Aktionen der Sequenz ã eingenommenen Zustände des technischen Systems. Im Rahmen des Lernens LE2 werden nur die mit C bezeichneten Gewichtungsmatrizen variiert. Die restlichen Gewichtungsmatrizen werden auf die Identität gesetzt.

Über das Neuron f wird die Funktion f(λ, s, s̃) = λs + (1-λ)s̃ realisiert. Dabei wird A = 1 verwendet, wenn der beim Lernen verwendete Datensatz aus den ursprünglichen Trainingsdaten stammt. Demgegenüber wird A = 0 verwendet, wenn der Datensatz aus den weiteren Trainingsdaten stammt und somit den Zustand s̃ und die entsprechende Aktionssequenz ã repräsentiert. Über den Parameter λ wird erreicht, dass immer dann, wenn ein Datensatz aus den weiteren Trainingsdaten verwendet wird, das neuronale Netz nicht mehr im Hinblick auf die Targets t₁, ..., tₙ bezüglich hoher Bewertungen optimiert wird, denn für λ = 0 werden die entsprechende Targets *t̃*₁, ..., *t̃ₙ* auf 0 gesetzt. Dies wird durch die entsprechenden Multiplikationsknoten M verdeutlicht, welche den Targets t₁, t₂, ..., tₙ nachgeschaltet sind. Durch die Funktion f bzw. den Multiplikationsknoten M, der der Aktion a nachgeschaltet ist, wird dabei erreicht, dass die Trainingsdaten s̃ und ã der weiteren Trainingsdaten in das neuronale Netz einfließen. Stammt demgegenüber ein Datensatz der Trainingsdaten aus den ursprünglichen Trainingsdaten, wird λ = 1 gesetzt, woraufhin das Lernverfahren dem ursprünglichen Lernverfahren LE1 entspricht.

Mit dem soeben beschriebenen Lernverfahren LE2 wird das neuronale Netz für weitere Trainingsdaten, welche verbesserte Aktionssequenzen darstellen, im Hinblick darauf optimiert, dass eine gute Übereinstimmung der vom Netz ausgegebenen Aktionssequenz mit der Aktionssequenz ã der weiteren Trainingsdaten vorliegt. Auf diese Weise wird die im Rahmen des Verfahrens erzeugte Ausgabe des neuronalen Netzes immer weiter verbessert.

Die im Vorangegangenen beschriebenen Ausführungsformen des erfindungsgemäßen Verfahrens weisen eine Reihe von Vorteilen auf. Insbesondere kann eine mit einem datengetriebenen Modell gelernte Aktionsauswahlregel in Echtzeit während des Betriebs des technischen Systems durch die Kombination mit einem numerischen Optimierungsverfahren und insbesondere einer Teilchenschwarmoptimierung verbessert werden, wobei durch eine lokale Variation entsprechender Aktionssequenzen sichergestellt ist, dass für das numerische Optimierungsverfahren wenig Rechenzeit benötigt wird.

### Literaturverzeichnis:

[1] DE 10 2007 001 025 A1
[2] DE 10 2008 020 379 A1
[3] Hentschel, Sanders, "An efficient algorithm for optimizing adaptive quantum metrology processes", Physical Review Letters 107, 233601, 2011
[4] J. Kennedy, R. C. Eberhart, and Y. Shi, "A new optimizer using particle swarm theory", Proceedings of the Sixth International Symposium on Micro Machine and Human Science, pp. 39-43, 1995
[5] A. Banks, J. Vincent, C. Anyakoha, "A review of particle swarm optimization. Part I: background and development", Natural Computing, Springer Netherlands, Volume 6, Issue 4 (2007), pp 467-484
[6] A. Banks, J. Vincent, C. Anyakoha, "A review of particle swarm optimization. Part II: hybridisation, combinatorial, multicriteria and constrained optimization, and indicative applications", Natural Computing, Springer Netherlands, Volume 7, Issue 1 (2008), pp 109-124
[7] D.M. Mukhopadhyay, M.O. Balitanas, A. Farkhod, SH Jeon, D. Bhattacharyya, "Genetic algorithm: A Tutorial Review", International Journal of Grid and Distributed Computing, Vol.2, No.3 (2009)

## Patentansprüche

1. Verfahren zur rechnergestützten Steuerung und/oder Regelung eines technischen Systems, insbesondere einer Energieerzeugungsanlage, bei dem das dynamische Verhalten des technischen Systems für mehrere Zeitpunkte jeweils durch einen Zustand (s) des technischen Systems und eine in diesem Zustand am technischen System durchgeführte Aktion (a) charakterisiert wird, wobei eine jeweilige Aktion (a) zu einem jeweiligen Zeitpunkt in einen neuen Zustand (s) des technischen Systems zum nächsten Zeitpunkt führt und eine Aktionssequenz eine oder mehrere aufeinander folgend am technischen System durchzuführende Aktionen (a) darstellt, bei dem:
a) über eine Aktionsauswahlregel (PO), welche durch Lernen eines datengetriebenen Modells (NN) basierend auf Trainingsdaten umfassend Datensätze aus bekannten Zuständen (s) und Aktionen (a) zu mehreren Zeitpunkten bestimmt wurde, für den Zustand (s) des technischen Systems zu einem aktuellen Zeitpunkt (t) eine erste Aktionssequenz (A1) umfassend eine initiale Aktion zum aktuellen Zeitpunkt ermittelt wird, wobei die erste Aktionssequenz (A1) auf einem beim Lernen des datengetriebenen Modells (NN) berücksichtigten Optimierungskriterium für den Betrieb des technischen Systems basiert und ein Gütemaß (RE) in Bezug auf das Optimierungskriterium aufweist;
b) mittels eines numerischen Optimierungsverfahren (PSO) nach solchen zweiten Aktionssequenzen (A2) umfassend eine initiale Aktion (a) zum aktuellen Zeitpunkt gesucht wird, welche ein Gütemaß (RE) aufweisen, das höher als das Gütemaß (RE) der ersten Aktionssequenz (A1) ist, wobei die Suche bei einer Anzahl von Start-Aktionssequenzen beginnt, welche durch Variation einer Anzahl von initial bereitgestellten Aktionssequenzen umfassend die erste Aktionssequenz (A1) bestimmt werden, wobei Start-Aktionssequenzen (A2) mit einer geringen Variation basierend auf einem Prioritätskriterium bevorzugt werden;
c) im Falle, dass in Schritt b) eine oder mehrere zweite Aktionssequenzen (A2) gefunden werden, zumindest ein Teil der aufeinander folgenden Aktionen (a) der zweiten Aktionssequenz (A2) mit dem höchsten Gütemaß (RE) am technischen System durchgeführt wird und ansonsten zumindest ein Teil der aufeinander folgenden Aktionen (a) der ersten Aktionssequenz (A1) durchgeführt wird.

2. Verfahren nach Anspruch 1, bei dem das datengetriebene Modell (NN), mit dem die Aktionsauswahlregel (PO) bestimmt wurde, ein neuronales Netz, insbesondere ein rekurrentes neuronales Netz, umfasst und/oder auf Gaußschen Prozessen und/oder auf Regressionsbäumen und/oder auf einer Support Vector Regression beruht.

3. Verfahren nach Anspruch 1 oder 2, bei dem das numerische Optimierungsverfahren (PSO) ein nicht-konvexes heuristisches Optimierungsverfahren und/oder ein gradientenfreies stochastisches Suchverfahren ist.

4. Verfahren nach einem der vorhergehenden Ansprüche, bei dem das numerische Optimierungsverfahren (PSO) eine Teilchenschwarmoptimierung und/oder ein evolutionärer Algorithmus und/oder ein genetischer Algorithmus und/oder Simulated Annealing ist.

5. Verfahren nach einem der vorhergehenden Ansprüche, bei dem die Aktionsauswahlregel (PO) auf ein für das technische System bestimmtes Simulationsmodell zugreift, mit dem aus einer Aktion (a) der ersten Aktionssequenz (A1), die für einen Zustand (s) zu einem Zeitpunkt durchgeführt wird, ein Folgezustand des technischen Systems zum nächsten Zeitpunkt ermittelt wird, wobei für den Folgezustand die Aktionsauswahlregel (PO) die nächste Aktion der ersten Aktionssequenz (A1) festlegt.

6. Verfahren nach Anspruch 5, bei dem mit dem Simulationsmodell ferner aus den jeweiligen Aktionen (a) der zweiten Aktionssequenz (A2) Folgezustände des technischen Systems bestimmt werden, wobei ein Bewertungsmaß für jeden Folgezustand der ersten und zweiten Aktionssequenz (A1, A2) ermittelt wird und das Gütemaß (RE) umso höher ist, je höher die Summe der Bewertungsmaße aller Folgezustände in der ersten bzw. zweiten Aktionssequenz (A1, A2) ist.

7. Verfahren nach Anspruch 5 oder 6, bei dem das Simulationsmodell über das Lernen eines neuronalen Netzes, insbesondere eines rekurrenten neuronalen Netzes, bestimmt wurde.

8. Verfahren nach einem der vorhergehenden Ansprüche, bei dem die Größe einer Variation basierend auf einer Metrik für jede Aktion (a) der Aktionssequenz oder auf einer Metrik für die gesamte Aktionssequenz definiert ist und/oder das Prioritätskriterium ein Wahrscheinlichkeitskriterium oder Schwellwertkriterium ist.

9. Verfahren nach einem der vorhergehenden Ansprüche, bei dem die Schritte a) bis c) in vorbestimmen Zeitabständen wiederholt werden und dabei die in Schritt c) zumindest teilweise ausgeführten ersten oder zweiten Aktionssequenzen (A1, A2) in einer Datenbank (DB) gespeichert werden, wobei in Schritt b) als initial bereitgestellte Aktionssequenzen die erste Aktionssequenz (A1) sowie diejenigen Aktionssequenzen (A) aus der Datenbank (DB) verwendet werden, deren initiale Aktionen (a) in Zuständen (s) des technischen Systems ausgeführt wurden, welche gemäß einer Metrik im Raum der Zustände (s) einen Abstand von dem Zustand des technischen System zum aktuellen Zeitpunkt (t) aufweisen, der kleiner oder kleiner gleich einem vorbestimmten Schwellwert ist.

10. Verfahren nach einem der vorhergehenden Ansprüche, bei dem bei Vorliegen von einem oder mehreren Kriterien ein bereits abgeschlossenes numerisches Optimierungsverfahren (PSO) fortgesetzt wird, wobei bei der Fortsetzung nach zweiten Aktionssequenzen (A2) mit einem höheren Gütemaß als die erste Aktionssequenz (A1) gesucht wird, ohne dass das Prioritätskriterium bei der Bestimmung der Start-Aktionssequenzen berücksichtigt wird.

11. Verfahren nach Anspruch 10, bei dem das oder die Kriterien das Kriterium umfassen, dass eine für das Verfahren zur Verfügung stehende Rechenkapazität eine vorbestimme Schwelle überschreitet.

12. Verfahren nach einem der vorhergehenden Ansprüche, bei dem das Lernen des datengetriebene Modells (NN) zu vorbestimmten Zeitpunkten basierend auf den Trainingsdaten sowie weiteren Trainingsdaten fortgesetzt wird, wobei die weiteren Trainingsdaten Datensätze umfassen, welche jeweils eine in Schritt c) zumindest teilweise durchgeführte Aktionssequenz (A1, A2) sowie zumindest den Zustand (s) des technischen Systems beinhalten, in dem die Aktionssequenz (A1, A2) begonnen wurde.

13. Verfahren nach Anspruch 12, bei dem immer dann, wenn beim Fortsetzen des Lernens ein Datensatz aus den weiteren Trainingsdaten verwendet wird, anstatt des Optimierungskriteriums für den Betrieb des technischen Systems das Optimierungskriterium einer möglichst geringen Abweichung zwischen der über das datengetriebene Modell (NN) bestimmten Aktionssequenz und der Aktionssequenz gemäß dem Datensatz aus den weiteren Trainingsdaten berücksichtigt wird.

14. Verfahren nach einem der vorhergehenden Ansprüche, bei dem eine elektrische Energieerzeugungsanlage umfassend eine Gasturbine geregelt und/oder gesteuert wird.

15. Verfahren nach Anspruch 14, bei dem ein Zustand der Gasturbine eine oder mehrere der nachfolgenden Zustandsvariablen umfasst, wobei eine Aktion vorzugsweise eine Veränderung von einer oder mehreren der nachfolgenden Zustandsvariablen betrifft:
- der Verdichterwirkungsgrad der Gasturbine;
- der Turbinenwirkungsgrad der Gasturbine;
- die geregelte Abgastemperatur der Gasturbine;
- die Stellung einer oder mehrerer Leitschaufeln, insbesondere im Verdichter der Gasturbine;
- die Rotationsgeschwindigkeit der Gasturbine;
- eine oder mehrere Drücke und/oder Temperaturen in der Gasturbine, insbesondere die Eintrittstemperatur und/oder der Eintrittsdruck und/oder die Austrittstemperatur und/oder der Austrittsdruck im Verdichter und/oder in der Turbine;
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- ein oder mehrere Massen- und/oder Volumenströme;
- ein oder mehrere Parameter von einem Kühl- und/oder Hilfssystem und/oder Schmieröl- und/oder Lagersystemen in der Gasturbine, insbesondere die Stellung von einem oder mehreren Ventilen zur Zufuhr von Kühlluft;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Verbrennungsdynamik der Brennkammer der Gasturbine;
- ein oder mehrere Parameter betreffend die Zuführung von Gas zu der Brennkammer der Gasturbine;
- die Menge an der Gasturbine zugeführtem Gas;
- Lager- und/oder Gehäuseschwingungen in der Gasturbine.

16. Verfahren nach Anspruch 14 oder 15, bei dem das Optimierungskriterium für den Betrieb des technischen Systems eine möglichst geringe Schadstoffemission der Gasturbine und/oder eine möglichst geringe Dynamik der Brennkammer der Gasturbine umfasst.

17. Vorrichtung zur rechnergestützten Steuerung und/oder Regelung eines technischen Systems, insbesondere einer elektrischen Energieerzeugungsanlage, wobei die Vorrichtung zur Durchführung eines Verfahrens nach einem der vorhergehenden Ansprüche eingerichtet ist.

18. Technisches System, umfassend die Vorrichtung gemäß Anspruch 17.

19. Computerprogrammprodukt mit einem auf einem maschinenlesbaren Träger gespeicherten Programmcode zur Durchführung des Verfahrens nach einem der Ansprüche 1 bis 16, wenn der Programmcode auf einem Rechner ausgeführt wird.

## Claims

1. Method for controlling and/or regulating a technical system, in particular an energy generation installation, in a computer-assisted manner, in which the dynamic behavior of the technical system is respectively characterized for a plurality of times by a state (s) of the technical system and an action (a) carried out on the technical system in this state, a respective action (a) at a respective time resulting in a new state (s) of the technical system at the next time, and an action sequence being one or more actions (a) to be successively carried out on the technical system, in which:
a) an action selection rule (PO), which was determined by learning a data-driven model (NN) on the basis of training data comprising data records comprising known states (s) and actions (a) at a plurality of times, is used to determine a first action sequence (A1) for the state (s) of the technical system at a current time (t), which first action sequence comprises an initial action at the current time, the first action sequence (A1) being based on an optimization criterion for operating the technical system, which is taken into account when learning the data-driven model (NN), and having a measure of quality (RE) with respect to the optimization criterion;
b) a numerical optimization method (PSO) is used to search for those second action sequences (A2) which have a measure of quality (RE) higher than the measure of quality (RE) of the first action sequence (A1), which second action sequences comprise an initial action (a) at the current time, the search starting with a number of starting action sequences which are determined by varying a number of initially provided action sequences comprising the first action sequence (A1), preference being given to starting action sequences (A2) having a slight variation on the basis of a priority criterion;
c) if one or more second action sequences (A2) are found in step b), at least some of the successive actions (a) in the second action sequence (A2) having the highest measure of quality (RE) are carried out on the technical system and otherwise at least some of the successive actions (a) in the first action sequence (A1) are carried out.

2. Method according to Claim 1, in which the data-driven model (NN) which was used to determine the action selection rule (PO) comprises a neural network, in particular a recurrent neural network, and/or is based on Gaussian processes and/or regression trees and/or support vector regression.

3. Method according to Claim 1 or 2, in which the numerical optimization method (PSO) is a non-convex heuristic optimization method and/or a gradient-free stochastic search method.

4. Method according to one of the preceding claims, in which the numerical optimization method (PSO) is particle swarm optimization and/or an evolutionary algorithm and/or a genetic algorithm and/or simulated annealing.

5. Method according to one of the preceding claims, in which the action selection rule (PO) accesses a simulation model which is intended for the technical system and is used to determine, from an action (a) in the first action sequence (A1) which is carried out for a state (s) at a time, a successor state of the technical system at the next time, the action selection rule (PO) stipulating the next action in the first action sequence (A1) for the successor state.

6. Method according to Claim 5, in which the simulation model is also used to determine successor states of the technical system from the respective actions (a) in the second action sequence (A2), an assessment measure being determined for each successor state of the first and second action sequences (A1, A2), and the measure of quality (RE) being higher, the higher the sum of assessment measures of all successor states in the first and second action sequences (A1, A2).

7. Method according to Claim 5 or 6, in which the simulation model was determined by learning a neural network, in particular a recurrent neural network.

8. Method according to one of the preceding claims, in which the magnitude of a variation is defined on the basis of a metric for each action (a) in the action sequence or a metric for the entire action sequence, and/or the priority criterion is a probability criterion or a threshold value criterion.

9. Method according to one of the preceding claims, in which steps a) to c) are repeated at predetermined intervals of time and the first or second action sequences (A1, A2) at least partially carried out in step c) are stored in a database (DB) in this case, with the first action sequence (A1) and those action sequences (A) from the database (DB) whose initial actions (a) were carried out in states (s) of the technical system which, according to a metric in the space of the states (s), have an interval from the state of the technical system at the current time (t) which is less than or less than or equal to a predetermined threshold value being used in step b) as initially provided action sequences.

10. Method according to one of the preceding claims, in which a numerical optimization method (PSO) which has already been concluded is continued if one or more criteria are present, in which case, during the continuation, a search is carried out for second action sequences (A2) having a higher measure of quality than the first action sequence (A1) without the priority criterion being taken into account when determining the starting action sequences.

11. Method according to Claim 10, in which the criterion or criteria comprise(s) the criterion that a computing capacity available for the method exceeds a predetermined threshold.

12. Method according to one of the preceding claims, in which the learning of the data-driven model (NN) is continued at predetermined times on the basis of the training data and further training data, the further training data comprising data records each comprising an action sequence (A1, A2) at least partially carried out in step c) and at least the state (s) of the technical system in which the action sequence (A1, A2) was started.

13. Method according to Claim 12, in which, whenever a data record from the further training data is used instead of the optimization criterion for operating the technical system when continuing learning, the optimization criterion of the smallest possible discrepancy between the action sequence determined using the data-driven model (NN) and the action sequence according to the data record from the further training data is taken into account.

14. Method according to one of the preceding claims, in which an electrical energy generation installation comprising a gas turbine is regulated and/or controlled.

15. Method according to Claim 14, in which a state of the gas turbine comprises one or more of the following state variables, an action preferably relating to a change of one or more of the following state variables:
- the compressor efficiency of the gas turbine;
- the turbine efficiency of the gas turbine;
- the regulated exhaust gas temperature of the gas turbine;
- the position of one or more guide blades, in particular in the compressor of the gas turbine;
- the rotational speed of the gas turbine;
- one or more pressures and/or temperatures in the gas turbine, in particular the inlet temperature and/or the inlet pressure and/or the outlet temperature and/or the outlet pressure in the compressor and/or in the turbine;
- the temperature in the environment in which the gas turbine is operated;
- the humidity in the environment in which the gas turbine is operated;
- the air pressure in the environment in which the gas turbine is operated;
- one or more mass and/or volumetric flows;
- one or more parameters of a cooling and/or auxiliary system and/or lubricating oil and/or bearing systems in the gas turbine, in particular the position of one or more valves for supplying cooling air;
- the performance of the gas turbine, in particular a percentage performance value;
- the fuel quality of the gas turbine;
- the pollutant emission of the gas turbine, in particular the emission of nitrogen oxides and/or carbon monoxide;
- the temperature of one or more turbine blades of the gas turbine;
- the combustion dynamics of the combustion chamber of the gas turbine;
- one or more parameters relating to the supply of gas to the combustion chamber of the gas turbine;
- the amount of gas supplied to the gas turbine;
- bearing and/or housing vibrations in the gas turbine.

16. Method according to Claim 14 or 15, in which the optimization criterion for operating the technical system comprises the lowest possible pollutant emission of the gas turbine and/or the lowest possible dynamics of the combustion chamber of the gas turbine.

17. Apparatus for controlling and/or regulating a technical system, in particular an electrical energy generation installation, in a computer-assisted manner, the apparatus being set up to carry out a method according to one of the preceding claims.

18. Technical system comprising the apparatus according to Claim 17.

19. Computer program product having a program code which is stored on a machine-readable carrier and is intended to carry out the method according to one of Claims 1 to 16 when the program code is executed on a computer.

## Revendications

1. Procédé de commande et/ou de régulation assistée par ordinateur d'un système technique, en particulier d'une installation de production d'énergie, dans lequel le comportement dynamique du système technique est caractérisé pour plusieurs moments respectivement par un état (s) du système technique et une action (a) exécutée dans cet état sur le système technique, dans lequel une action (a) respective à un moment respectif conduit à un nouvel état (s) du système technique au moment suivant et représente une séquence d'actions d'une ou plusieurs action(s) à exécuter de manière consécutive sur le système technique, dans lequel :
a) par une règle de sélection d'actions (PO), laquelle a été déterminée à différents moments par apprentissage d'un modèle (NN) entraîné par des données, en se basant sur des données d'apprentissage comprenant des jeux de données d'états (s) et d'actions (a) connus, pour l'état (s) du système technique à un moment (t) actuel, une première séquence d'actions (A1) comprenant une action initiale au moment actuel est calculée, dans lequel la première séquence d'actions (A1) est basée sur un critère d'optimisation pour le fonctionnement du système technique pris en compte lors de l'apprentissage du modèle (NN) entraîné par des données, et présente un facteur de qualité(RE) par rapport au critère d'optimisation ;
b) au moyen d'un procédé d'optimisation numérique (PSO), il est recherché des deuxièmes séquences d'actions (A2) comprenant une action (a) initiale au moment actuel qui présentent un facteur de qualité (RE) qui est supérieur au facteur de qualité (RE) de la première séquence d'actions (A1), dans lequel la recherche commence à un nombre de séquences d'actions de départ qui sont déterminées par variation d'un nombre de séquences d'actions fournies initialement comprenant la première séquence d'actions (A1), dans lequel des séquences d'actions de départ (A2) avec une variation faible basée sur un critère de priorité sont préférées ;
c) dans le cas où à l'étape b), une ou plusieurs deuxième(s) séquence(s) d'actions (A2) est/sont trouvée(s), au moins une partie des actions (a) successives de la deuxième séquence d'actions (A2) avec le facteur de qualité (RE) le plus élevé est exécutée sur le système technique et sinon au moins une partie des actions (a) successives de la première séquence d'actions (A1) est exécutée.

2. Procédé selon la revendication 1, dans lequel le modèle (NN) entraîné par des données, avec lequel la règle de sélection d'actions (PO) a été déterminée, comprend un réseau neuronal, en particulier un réseau neuronal récurrent, et/ou repose sur des procédés gaussiens et/ou des arbres de régression et/ou sur une régression de vecteur de support (Support Vector Régression).

3. Procédé selon la revendication 1 ou 2, dans lequel le procédé d'optimisation numérique (PSO) est un procédé d'optimisation heuristique non-convexe et/ou un procédé de recherche stochastique libre de gradients.

4. Procédé selon l'une des revendications précédentes, dans lequel le procédé d'optimisation numérique (PSO) est une optimisation par essaim de particules et/ou un algorithme évolutif et/ou un algorithme génétique et/ou un recuit simulé (simulated annealing).

5. Procédé selon l'une des revendications précédentes, dans lequel la règle de sélection d'actions (PO) a recours à un modèle de simulation déterminé pour le système technique, avec lequel à partir d'une action (a) de la première séquence d'actions (A1) qui est exécutée pour un état (s) à un moment, un état consécutif du système technique est calculé au moment suivant, dans lequel pour l'état consécutif, la règle de sélection d'actions (PO) détermine l'action suivante de la première séquence d'actions (A1).

6. Procédé selon la revendication 5, dans lequel avec le modèle de simulation, des états consécutifs du système technique sont déterminés en outre à partir des actions (a) respectives de la deuxième séquence d'actions (A2), dans lequel un facteur d'évaluation pour chaque état consécutif des première et deuxième séquences d'actions (A1, A2) est calculé et le facteur de qualité (RE) est d'autant plus élevé que la somme des facteurs d'évaluation de tous les états consécutifs dans les première, respectivement deuxième séquences d'actions (A1, A2) est élevée.

7. Procédé selon la revendication 5 ou 6, dans lequel le modèle de simulation a été déterminé par l'apprentissage d'un réseau neuronal, en particulier d'un réseau neuronal récurrent.

8. Procédé selon l'une des revendications précédentes, dans lequel la taille d'une variation est définie en se basant sur une métrique pour chaque action (a) de la séquence d'actions ou sur une métrique pour la totalité de la séquence d'actions et/ou le critère de priorité est un critère de probabilité ou de valeur seuil.

9. Procédé selon l'une des revendications précédentes, dans lequel les étapes a) à c) sont répétées à des intervalles prédéfinis et les première ou deuxième séquence(s) d'actions (A1, A2) exécutées au moins partiellement à l'étape c) sont enregistrées dans une base de donnée (DB), dans lequel à l'étape b), sont utilisées en tant que séquences d'actions fournies initialement, la première séquence d'actions (A1) ainsi que les séquences d'actions (A) de la base de données (DB) dont les actions (a) initiales sont exécutées dans les états (s) du système technique, lesquels présentent selon une métrique dans l'espace des états (s), une distance de l'état du système technique au moment (t) actuel qui est inférieure ou égale à une valeur seuil prédéterminée.

10. Procédé selon l'une des revendications précédentes, dans lequel, en présence d'un ou plusieurs critère(s), un procédé d'optimisation numérique (PSO) déjà terminé est poursuivi, dans lequel lors de la poursuite, il est recherché des secondes séquences d'actions (A2) avec un facteur de qualité plus élevé que la première séquence d'actions (A1) sans que le critère de priorité ne soit pris en compte lors de la détermination de la séquence d'actions de départ.

11. Procédé selon la revendication 10, dans lequel le ou les critère(s) comprend/comprennent le critère qu'une capacité de calcul présente pour le procédé dépasse un seuil prédéterminé.

12. Procédé selon l'une des revendications précédentes, dans lequel l'apprentissage du modèle (NN) entraîné par des données est poursuivi à des moments prédéterminés en se basant sur les données d'apprentissage ainsi que sur d'autres données d'apprentissage, dans lequel les autres données d'apprentissage comprennent des jeux de données qui contiennent respectivement une séquence d'actions (A1, A2) exécutée au moins partiellement à l'étape c) ainsi qu'au moins l'état (s) du système technique dans lequel la séquence d'actions (A1, A2) a commencé.

13. Procédé selon la revendication 12, dans lequel toujours lors de la poursuite de l'apprentissage, un jeu de données issu des autres données d'apprentissage est utilisé, au lieu du critère d'optimisation pour le fonctionnement du système technique, le critère d'optimisation d'un écart le plus faible possible entre la séquence d'actions déterminée par le modèle (NN) entraîné par des données et la séquence d'actions selon le jeu de données issue des autres données d'apprentissage est pris en compte.

14. Procédé selon l'une des revendications précédentes, dans lequel une installation de production d'énergie électrique comprenant une turbine à gaz est régulée et/ou commandée.

15. Procédé selon la revendication 14, dans lequel un état de la turbine à gaz comprend une ou plusieurs des variables d'état suivantes, dans lequel une action, de préférence, une modification d'une ou plusieurs des variables d'état suivantes concerne :
- le rendement du compresseur de la turbine à gaz ;
- le rendement de turbine de la turbine à gaz ;
- la température de gaz d'échappement régulée de la turbine à gaz ;
- la position d'une ou plusieurs aube(s) directrice (s), en particulier dans le compresseur de la turbine à gaz ;
- la vitesse de rotation de la turbine à gaz ;
- une ou plusieurs pression (s) et/ou température(s) dans la turbine à gaz, en particulier la température d'entrée et/ou la pression d'entrée et/ou la température de sortie et/ou la pression de sortie dans le compresseur et/ou dans la turbine ;
- la température dans l'environnement dans lequel la turbine à gaz est exploitée ;
- l'humidité de l'air dans l'environnement dans lequel la turbine à gaz est exploitée ;
- la pression de l'air dans l'environnement dans lequel la turbine à gaz est exploitée ;
- un ou plusieurs débits massiques et/ou volumiques ;
- un ou plusieurs paramètre(s) d'un système de refroidissement et/ou auxiliaire et/ou systèmes d'huile de lubrification et/ou de palier dans la turbine à gaz, en particulier la position d'une ou plusieurs soupape(s) d'admission d'air de refroidissement ;
- la puissance de la turbine à gaz, en particulier une valeur de puissance en pourcentage ;
- la qualité de combustible de la turbine à gaz ;
- l'émission de polluants de la turbine à gaz, en particulier l'émission d'oxydes d'azote et/ou de monoxyde de carbone ;
- la température d'une ou plusieurs aube(s) de turbine de la turbine à gaz ;
- la dynamique de combustion de la chambre de combustion de la turbine à gaz ;
- un ou plusieurs paramètre(s) concernant l'alimentation de gaz vers la chambre de combustible de la turbine à gaz ;
- la quantité du gaz alimenté vers la turbine à gaz ;
- les vibrations de palier et/ou de boîtier dans la turbine à gaz.

16. Procédé selon la revendication 14 ou 15, dans lequel le critère d'optimisation pour le fonctionnement du système technique comprend une émission de polluants la plus faible possible de la turbine à gaz et/ou une dynamique la plus faible possible de la chambre de combustion de la turbine à gaz.

17. Dispositif pour la commande et/ou la régulation assistée par ordinateur d'un système technique, en particulier d'une installation de production d'énergie électrique, dans lequel le dispositif est conçu pour exécuter un procédé selon l'une des revendications précédentes.

18. Système technique, comprenant le dispositif selon la revendication 17.

19. Produit de programme informatique comprenant un code de programme stocké sur un support lisible par une machine pour exécuter le procédé selon l'une des revendications 1 à 16, lorsque le code de programme est exécuté sur un ordinateur.
